# EUROPEAN PATENT SPECIFICATION

(11) **EP 0 435 442 B1**
(45) Date of publication and mention of the grant of the patent: **10.07.1996**
(21) Application number: 90312539.1
(22) Date of filing: 16.11.1990
(51) Int. Cl.: B23D 47/10, B28D 5/02, B28D 1/04

(54) **Method and apparatus for cutting inorganic materials**
Verfahren und Apparat zum Schneiden von anorganischen Materialien
Procédé et dispositif pour couper des matériaux inorganiques

(30) Priority: 17.11.1989 JP 299145/89
(43) Date of publication of application: 03.07.1991
(73) Proprietor: KABUSHIKI KAISHA SHIMOMURA SEISAKUSHO, Kawasaki-shi, Kanagawa-ken (JP)
(72) Inventor: Shimomura, Taizo, c/o KK Shimomura Seisakusho, Kawasaki-shi, Kanagawa-ken (JP)
(74) Representative: Leale, Robin George

(56) References cited:
- BE-A- 864 717
- CH-A- 333 120
- GB-A- 2 203 972
- US-A- 2 855 733
- US-A- 2 917 873
- US-A- 4 091 698
- PATENT ABSTRACTS OF JAPAN, vol. 10, no. 346 (M-537)[2402], 21st November 1986; & JP-A-61 146 470 (TOSHIBA CORP.) 04-07-1986
- PATENT ABSTRACTS OF JAPAN, vol. 11, no. 258 (M-618)[2705], 21st August 1987; & JP-A-62 63 008 (DAITO SEIKI) 19-03-1987

## Description

This invention relates to a method of cutting materials that are hard to cut, such as ceramics, with a rotary sheet hone made of hone particles and a binder.

Inorganic substances such as ceramics and other materials that are hard to cut, are difficult to shear or thermally cut with a gas or the like. Conventionally a rotary sheet hone made of a hone and binder is used. By rotating a sheet hone made of hone particles and a binder, a ceramic workpiece is pressed under a fixed pressure, is fed with a cooling oil (water) in the part to be cut and is cut while being cooled.

In the above mentioned conventional cutting method, in which the sheet hone is rotated while pressing the workpiece under a fixed pressure until cutting is completed, there have been problems in that the cutting speed is limited and the durability of the sheet hone is short.

When the sheet hone is rotated, while constantly engaging the work piece under a fixed pressure, the sheet hone will always be kept in contact with the workpiece on the entire surface of the pressed part to be cut, therefore the contact area is large, the rotation of the sheet hone will be braked, the cutting speed will reduce and the cutting operation will take more time.

Further, when the sheet hone is rotated while constantly pressing the workpiece under a fixed pressure, it is hard for the cooling oil (or water) to penetrate the part to be cut; the sheet hone and workpiece will not be adequately cooled but will be heated to a high temperature, the cutting capacity will be reduced and the workpiece will be denatured by the deterioration or the like of the binder and, in some cases, the sheet hone will break.

The document GB-A-2203972 describes a method of cutting an article with a rotary sheet hone, comprising repeatedly varying the force of engagement of the rotary sheet hone with the article between a maximum value corresponding to a conditon of maximum engagement between the article and the hone, and a minimal value.

In this document, whilst the cutting wheel is retracted from the article, this is described as a "small spontaneous retraction", and is not large enough to cause the cutting wheel to be completely withdrawn from the cut being formed in the article. Furthermore, the retraction is an inevitable consequence of the apparatus used to provide intermittent advancement, rather than an integral part of the cutting method. In GB-A-2203972 the advantageous improvement in the quality of the cut surface and the increase in the life of the cutting wheel provided by that invention is due to the advancement of the cutting wheel into the article being intermittent rather than continuous.

Another similar cutting method is described in US-A-2855733. However, the feature of the hone being completely withdrawn from the cut being formed in the article is not disclosed or suggested in US-A-2855733. In this document, the abrasive wheel makes rapid oscillations which are superimposed on the normal rotary motion of the wheel, whereby the axis of the cutting wheel maintains the same vertical distance above the axis of the article being cut while making small lateral oscillations.

The present invention has been made in view of the above mentioned circumstances and has it as an object to provide an efficient cutting operation, to improve the durability of a sheet hone and to prevent the workpiece from being denatured by heat.

Viewed from one aspect the present invention provides a method of cutting an article with a rotary sheet hone, comprising repeatedly varying the force of engagement of the rotary sheet hone with the article between a maximum value, corresponding to a condition of maximum engagement between the article and the hone, and a minimum value corresponding to a condition of total disengagement between the article and the hone wherein the hone is completely withdrawn from the cut being formed in the article, the force of engagement being varied by means of a pneumatic system which moves the hone and the article relative to each other.

An embodiment of the invention will now be described by way of example and with reference to the accompanying drawings, in which:-
Fig. 1 is a partly sectioned elevation showing an example of an apparatus for use with the method of cutting an article,
Fig. 2 is a side view of the apparatus of Fig. 1,
Fig. 3 is an example of a control circuit diagram of the above mentioned apparatus.

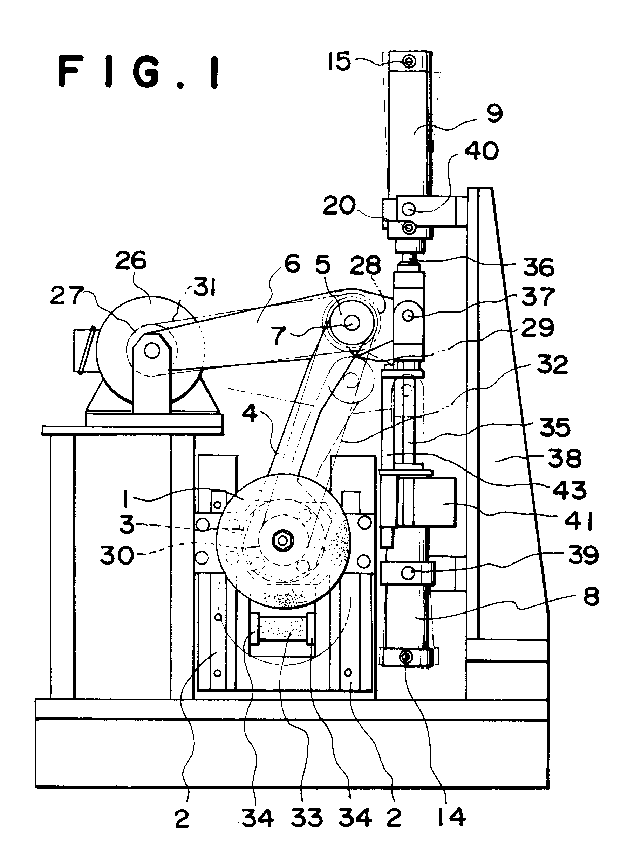

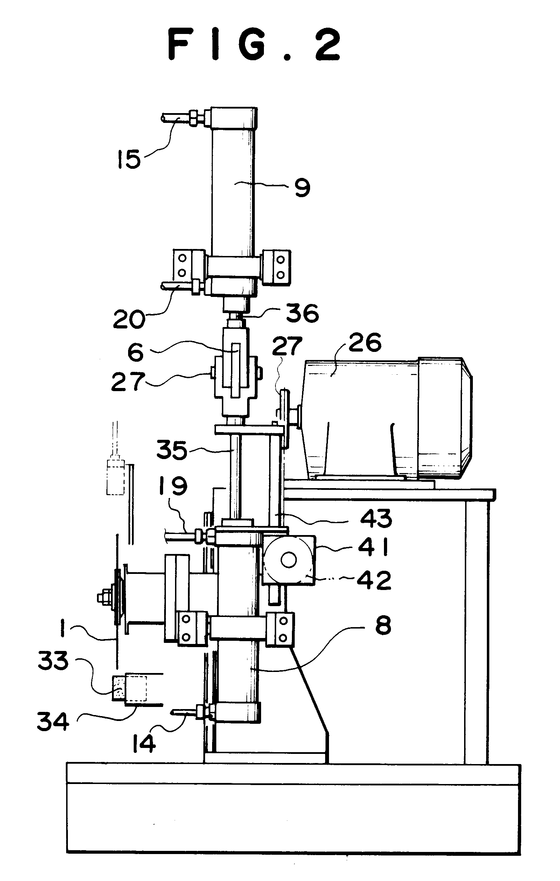

In Figs. 1 and 2 is shown an example of an embodiment of apparatus for working the method of the present invention.

In the drawings, the reference numeral 1 represents a sheet hone provided movable vertically between frame side guides 2.

A movable rod 4 extends from a bearing 3 of the sheet hone and is pivoted at its upper end 5 by a pin 7 to a vertically moving rod 6 which is vertically moved by air cylinders 8 and 9 so that the control of the fluctuation of the pressing force of the sheet hone 1 and the release of the pressing force may be repeated through the movable rod 4.

A motor 26 is provided for rotating the sheet hone 1 through a pulley 27 provided on the rotary shaft of said motor 26, pulleys 28, 29 provided on the above mentioned pin 7, and a pulley 30 provided on the rotary shaft of the above mentioned sheet hone 1. Driving belt 31 extends between pulleys 27 and 28, and driving belt 32 extends between pulleys 29 and 30.

In the above mentioned formation, the sheet hone 1 is rotated through the pulley 27 of the motor 6, driving belt 31, pulleys 28 and 29, driving belt 32 and pulley 30. In the drawings, the reference numeral 33 represents an article to be worked and 34 represents a holder of the article to be worked.

As mentioned above, the sheet hone 1 is vertically movable. In particular pistons rods 35 and 36 of the air cylinders 8 and 9 are connected with each other through a pin 37 to which the above mentioned vertically moving rod 6 is connected at its end. The air cylinders 8 and 9 are supported on a frame 38 by pins 39 and 40 so as to be rockable with respect to the frame 38.

In the event that the vertically moving rod 6, connected at pin 37 to piston rods 35 and 36, is vertically moved at the top by the air cylinders 8 and 9, said vertically moving rod 6 will move arcuately at the tip and therefore the air cylinders 1 and 2 will rock with the pins 39 and 40 as axes in response to this movement. In the drawings, the reference numeral 41 represents an encoder within which a pinion 42 is provided. A rack 43 provided from the piston rod 35 is meshed with said pinion 42 to detect the vertically moving stroke of the piston rods 35 and 36 and is further utilized to repeat the later described control of the fluctuation of the pressing force and the release of the pressing force.

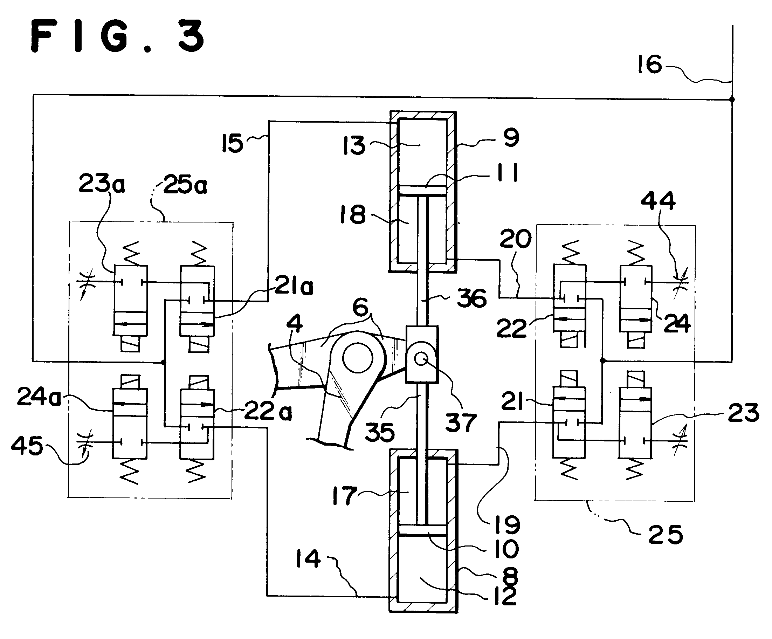

As shown in Fig. 3, a switching valve 25 is provided for pipelines 19 and 20 from the rod cover side compartments 17 and 18 of cylinders 8 and 9 to connect or disconnect pipelines 19 and 20 with an operating pressure line 16 and to be able to discharge air within the above mentioned side compartments 18 and 17 together with said disconnection.

In the same manner, a switching valve 25a of the same formation as the above mentioned switching valve 25 is provided for pipelines 14 and 15 from the head cover side compartments 12 and 13 to connect or disconnect the pipelines 14 and 15 with the above mentioned operating line 16 and further to be able to discharge air within the above mentioned opposite side compartments 13 and 12 together with said disconnection.

The switching valve 25 shall be described in the following and is formed by combining valves 21, 22, 23 and 24 each having two ports so that the valves 21 and 24 may be simultaneously operated to be opened or closed and the valves 22 and 23 may be simultaneously operated to be opened or closed. The switching valve 25a operates in a similar manner.

In the embodiment of the above mentioned construction, by the operation of the switching valves 25 and 25a, from the operating pressure line 16, air under a fixed operating pressure will be fed to the rod cover side compartment 17 of the air cylinder 8 and the head cover side compartment 13 of the air cylinder 9 and, on the other hand, air in the head cover side compartment 12 of the air cylinder 8 and the rod cover side compartment 18 of the air cylinder 9 will be discharged so that the sheet hone 1 may be lowered through the movable rod 4 and vertically moving rod 6 and, by the reverse switching operation, the sheet hone 1 may be elevated.

That is to say, when the valves 21 and 24 of the switching valve 25 are simultaneously opened, the operating pressure line 16 will communicate with the rod cover side compartment 17 of the air cylinder 8 through the valve 21 and piping 19. On the other hand, the rod cover side compartment 18 of the air cylinder 9 will be opened to the atmosphere through the line 20, valves 22 and 24 and throttle valve 44. When the valves 21a and 24a of the switching valve 25a are simultaneously opened, the operating pressure line 16 will communicate with the head cover side compartment 13 of the air cylinder 9 through the valve 21a and line 15.

On the other hand, the head cover side compartment 12 of the air cylinder 8 will be opened to the atmosphere through the line 14, valves 22a and 24a and throttle valve 45 so that the sheet hone 1 may be lowered to press the article 33 to be worked.

By the operation reverse to the above of the switching valves 25 and 25a, the sheet hone 1 can be elevated to vary and release the pressing force.

That is to say, by opening the valves 22 and 23 of the switching valve 25 and the valves 22a and 23a of the switching valve 25a, the sheet hone 1 can be elevated to vary and release the pressing force on the article 33 to be worked.

As mentioned above, by operating the switching valves 25 and 25a to be opened and closed, the vertically moving rod 6 can be vertically moved and further the fluctuation control and release of the pressing force of the sheet hone 1 can be repeated through the movable rod 4.

The sheet hone 1 is rotated by the motor 26 and is further vertically moved by the switching operation of the switching valves 25 and 25a.

That is to say, the fluctuation of the pressing force is controlled and, in the upper limit position, the pressing force is released.

Therefore, as the sheet hone 1 is not always in contact with the worked article 33 on the entire surface of the pressed part to be cut as heretofore, even if the sheet hone 1 is braked, when the pressing force is small and further when the pressing force is released, the rotation will recover to the normal state, then the cutting work will be resumed and recovered, therefore the cutting efficiency will be high, the partly left part not yet cut will be first cut in the next cutting, thus the once cut area may be small and therefore the cutting efficiency can be improved.

Further, when the pressing force is small and when the pressing force is released, a cooling oil (water) will penetrate the part being cut so that the sheet hone 1 and article 33 being worked may not be heated more than is necessary, the durability of the sheet hone 1 may be improved and further the worked article may be prevented from being denatured by heat.

Further, the cutting efficiency and durability of the sheet hone can be improved to be about twice as high as before and, even if cheap hone particles and binder are used, the initial cutting object will be able to be economically attained.

## Claims

1. A method of cutting an article with a rotary sheet hone, comprising repeatedly varying the force of engagement of the rotary sheet hone with the article between a maximum value, corresponding to a condition of maximum engagement between the article and the hone and a minimum value corresponding to a condition of total disengagement between the article and the hone, wherein the hone is completely withdrawn from the cut being formed in the article, the force of engagement being varied by means of a pneumatic system which moves the hone and the article relative to each other.

## Patentansprüche

1. Verfahren zum Schneiden eines Gegenstandes mit einer Rotations-Honscheibe, umfassend das wiederholte Verändern der Angriffskraft der Rotations-Honscheibe an dem Gegenstand zwischen einem Maximalwert, der dem Zustand des Maximalangriffs zwischen dem Gegenstand und der Honscheibe entspricht, und einem Minimalwert, der dem Zustand des vollständigen Außereingriffs zwischen dem Gegenstand und der Honscheibe entspricht, wobei die Honscheibe vollständig aus dem in der Ausbildung begriffenen Schnitt im Gegenstand zurückgezogen wird und die Angriffskraft mittels eines pneumatischen Systems verändert wird, das die Honscheibe und den Gegenstand relativ zueinander bewegt.

## Revendications

1. Procédé pour couper un article à l'aide d'un rodoir rotatif en feuilles, comprenant l'opération consistant à varier à maintes reprises la force de mise en contact du rodoir rotatif en feuilles avec l'article, entre une valeur maximale correspondant à un état de mise en contact maximale de l'article avec le rodoir, et une valeur minimale correspondant à un état de totale mise hors de contact de l'article avec le rodoir, dans lequel le rodoir est totalement retiré de la coupe qui est réalisée dans l'article, la force de mise en contact étant variée au moyen d'un dispositif pneumatique qui fait déplacer le rodoir et l'article, l'un par rapport à l'autre.
